# EUROPÄISCHE PATENTANMELDUNG

(11) **EP 4 786 148 A1**
(43) Veröffentlichungstag der Anmeldung: **05.08.2026**
(21) Anmeldenummer: 25155040.6
(22) Anmeldetag: 30.01.2025
(51) Int. Cl.: B29C 64/129, B29C 64/277, B29C 64/286, B33Y 10/00, B33Y 30/00, G02B 5/00, G02B 26/02, G03B 9/02

(54) **3D-DRUCKVORRICHTUNG**

(71) Anmelder: Universität Kassel (Körperschaft d. öffentlichen Rechts), 34125 Kassel (DE)
(72) Erfinder: Börcsok, Josef, 68753 Waghäusel (DE); Hillmer, Hartmut, 34128 Kassel (DE); Telawi, Samer, 34125 Kassel (DE); Michel, Jakob, 34134 Kassel (DE)
(74) Vertreter: Walther Bayer Faber Patentanwälte PartGmbB

(57) **Zusammenfassung**

Eine 3D-Druckvorrichtung (100) zur Fertigung von Bauteilen mittels badbasierter Photopolymerisation, wenigstens umfassend
- einen Behälter (1) für ein Polymerbad,
- eine Bauteilplattform (2), die relativ zum Behälter (1) verlagerbar ist,
- eine Beleuchtungseinheit (3) zur Belichtung des Polymerbads, insbesondere umfassend UV-Licht (L) emittierende LED-Leuchtmittel, und
- ein Display (4), das zwischen der Beleuchtungseinheit (3) und dem Behälter (1) angeordnet und von der Beleuchtungseinheit (3) hinterleuchtbar ist, wobei die optische Transmissivität des Displays (4) räumlich und zeitlich modulierbar ist.
Das Display (4) umfasst wenigstens eine MEMS-Einheit (40), die eine regelmäßige Anordnung von Mikroblattelementen (41) mit aktuierbaren Blattabschnitten (42) aufweist, die jeweils zwischen einer lichtundurchlässigen geschlossenen Stellung und wenigstens einer lichtdurchlässigen geöffneten Stellung schwenkbar sind, derart, dass die räumlich-zeitliche Modulation der optischen Transmissivität des Displays (4) mittels Aktuierung der Blattabschnitte (42) erzeugbar ist.

## Beschreibung

Die vorliegende Erfindung betrifft eine 3D-Druckvorrichtung zur Fertigung von Bauteilen mittels badbasierter Photopolymerisation.

### STAND DER TECHNIK

Die badbasierte Photopolymerisation ist eine Kategorie an Additiven Fertigungsverfahren ("3D-Druck") gemäß der Norm DIN ISO 52900:2022-03. Bei diesen Verfahren erfolgt eine schichtweise Fertigung von Bauteilen mittels selektiver Härtung eines flüssigen Photopolymers durch photoinduzierte Polymerisation. Das Polymerbad kann neben dem Photopolymer dispergierte Metall- oder Keramikpulver sowie weitere Additive enthalten. Die selektive Belichtung des Polymerbads erfolgt üblicherweise mittels UV-Licht, wobei sowohl die Verwendung von Laserquellen als auch von LED-Leuchtmitteln gebräuchlich ist.

Unter den Laser-basierten Verfahren ist insbesondere die Stereolithographie zu nennen, bei der ein Laserstrahl die zu belichtenden Flächen im Polymerbad sukzessive abrastert. Das DLP-Verfahren (Digital Light Processing) verwendet ein Mikrospiegelmodul, um Laserlicht räumlich großflächig zu modulieren, sodass jede Schicht des zu fertigenden Bauteils simultan als Ganzes belichtet werden kann. Daraus resultiert im Vergleich zur Stereolithographie eine wesentlich kürzere Fertigungsdauer bei typischerweise jedoch geringerer Detailgenauigkeit.

Eine vollflächige Beleuchtung mittels lichtstarker LED-Leuchtmittel verwenden sogenannte MSLA-Vorrichtungen (Masked Stereolithography Apparatus), wobei zwischen der Beleuchtungseinheit und dem Polymerbad ein Flüssigkristall-Display (LCD) angeordnet ist, das für eine zweckmäßige Modulation der Beleuchtung sorgt. Im Vergleich zu den Laser-basierten 3D-Druckvorrichtungen sind die MSLA-Typen kostengünstiger und weisen einen kompakteren Aufbau auf. Nachteilig ist die Alterung der optisch aktiven Komponenten von LCDs unter Einwirkung von UV-Licht. Ferner weisen LCDs im UV-Spektralbereich einen vergleichsweise geringen Konversions-Wirkungsgrad (eingespeiste elektrischer Energie in optische Energie) auf, woraus eine hohe Betriebswärme resultiert, die der Lebensdauer der LCDs ebenfalls abträglich ist.

### OFFENBARUNG DER ERFINDUNG

Die Erfindung setzt an einer 3D-Druckvorrichtung zur Fertigung von Bauteilen mittels badbasierter Photopolymerisation nach Art einer bekannten MSLA-Vorrichtung an, die einen Behälter für ein Polymerbad umfasst, eine Bauteilplattform, die relativ zum Behälter verlagerbar ist, eine Beleuchtungseinheit zur Belichtung des Polymerbads, insbesondere umfassend UV-Licht emittierende LED-Leuchtmittel, und ein Display, das zwischen der Beleuchtungseinheit und dem Behälter angeordnet und von der Beleuchtungseinheit hinterleuchtbar ist, wobei die optische Transmissivität des Displays räumlich und zeitlich modulierbar ist. Es ist die Aufgabe der vorliegenden Erfindung, eine Weiterbildung einer solchen 3D-Druckvorrichtung vorzuschlagen, die insbesondere einen wartungsarmen Dauerbetrieb mit hohem Fertigungsdurchsatz ermöglichen soll.

Diese Aufgabe wird von einer 3D-Druckvorrichtung gemäß Anspruch 1 gelöst. Vorteilhafte Weiterbildungen der Erfindung sind in den abhängigen Ansprüchen angegeben.

Die technische Lehre der Erfindung offenbart, dass das Display wenigstens eine MEMS-Einheit umfasst, die eine regelmäßige Anordnung von Mikroblattelementen mit aktuierbaren Blattabschnitten aufweist, die jeweils zwischen einer lichtundurchlässigen geschlossenen Stellung und wenigstens einer lichtdurchlässigen geöffneten Stellung schwenkbar sind, derart, dass die räumlich-zeitliche Modulation der optischen Transmissivität des Displays mittels Aktuierung der Blattabschnitte erzeugbar ist.

Die Erfindung geht dabei von dem Gedanken aus, das bei MSLA-Vorrichtungen im Stand der Technik verwendete LCD durch ein Display basierend auf einer MEMS-Einheit (mikro-elektromechanisches System) zu ersetzen, welches nicht den eingangs genannten Alterungseffekten von LCDs unterliegt, sondern für den Dauerbetrieb unter UV-Lichteinwirkung geeignet ist. Somit kann die erfindungsgemäße 3D-Druckvorrichtung mit einer besonders lichtstarken Beleuchtungseinheit ausgestattet werden, wodurch ein hoher Fertigungsdurchsatz auch bei hoher Detailgenauigkeit, d.h., bei hoher Displayauflösung möglich ist.

Die MEMS-Einheit basiert insbesondere auf Mikroblattelementen mit elektrostatisch aktuierbaren Blattabschnitten, die jeweils einem Pixel des Displays zugeordnet sind. Beispielsweise weisen die Blattabschnitte eine quadratische Kontur auf. Sofern sich sämtliche Blattabschnitte in der geschlossenen Stellung befinden, ist das Display gänzlich lichtundurchlässig, d.h., dass von der Beleuchtungseinheit emittiertes Licht am Display vollständig blockiert wird und keine Belichtung des Polymerbads erfolgt. Durch Schwenken individueller Blattabschnitte in eine geöffnete Stellung wird lokal ein Lichtdurchtritt ermöglicht und die jeweils zugeordneten Pixel des Displays transmittieren das von der Beleuchtungseinheit emittierte Licht in Richtung des Polymerbads.

In vorteilhafter Ausführungsform sind die Blattabschnitte in eine Mehrzahl an geöffneten Stellungen schwenkbar, wobei sich die optische Transmissivität des Displays zwischen den unterschiedlichen geöffneten Stellungen unterscheidet, wobei insbesondere eine vollständig geöffnete Stellung einnehmbar ist, in der jeweilige Blattabschnitt keine Verringerung der optischen Transmissivität bewirkt. Mittels einer teilweisen Öffnung der Blattabschnitte werden die jeweils überdeckten Flächen abschnittsweise freigelegt, sodass eine sub-Pixel Auflösung resultiert, d.h., dass das zugehörige Pixel nicht vollflächig transparent, d.h., aktiv ist, sondern nur in einem Teilbereich. Beispielsweise sind die Blattabschnitte zwischen der geschlossenen Stellung und einer vollständig geöffneten Stellung über ein Schwenkwinkelintervall von bis zu 110° schwenkbar, wobei die Blattabschnitte insbesondere im Wesentlichen stufenlos schwenkbar sind.

Die MEMS-Einheit weist insbesondere eine Trägerplatte mit einer der Anzahl an Mikroblattelementen entsprechenden Anzahl an Lichtdurchtrittszonen auf, wobei die Mikroblattelemente auf der Trägerplatte angeordnet und je einer Lichtdurchtrittszone zugeordnet sind, wobei die Blattabschnitte in der jeweils geschlossenen Stellung parallel zur Trägerplatte orientiert sind und die jeweils zugeordnete Lichtdurchtrittszone vollständig überdecken, und wobei die Blattabschnitte in der wenigstens einen geöffneten Stellung derart verschwenkt sind, dass die jeweils zugeordnete Lichtdurchtrittszone in Transmissionsrichtung zumindest teilweise freigelegt ist. Die Trägerplatte ist beispielsweise aus einem transparenten Glas ausgebildet und weist eine opake Beschichtung auf, die lokal unter Bildung der Lichtdurchtrittszonen unterbrochen ist. Die Kontur und die Abmessungen der Lichtdurchtrittszonen können zweckmäßig an den konkreten Aufbau des Displays angepasst werden, beispielsweise als runde oder quadratische Aussparungen (Ätzungen) der opaken Beschichtung.

Die Verschwenkbarkeit der Blattabschnitte basiert vorzugsweise auf einem elektrostatischen Wirkprinzip, wozu die Trägerplatte der MEMS-Einheit ein elektrisch leitfähiges Material aufweist, beispielsweise eine optisch transparente Indiumzinnoxid-Schicht, und die Mikroblattelemente Elektroden aufweisen oder bilden, wobei eine steuerbare Spannungsquelle und ein Adressierungsnetzwerk zum Anlegen von elektrischen Spannungssignalen zwischen der Trägerplatte und den Elektroden der Mikroblattelemente vorgesehen ist. Durch Erzeugen einer elektrischen Potentialdifferenz mittels der Spannungsquelle ist eine elektrostatische Kraft zwischen den Blattabschnitten und der Trägerplatte erzeugbar.

Die Verschwenkbarkeit der Blattabschnitte basiert weiterhin auf einer zweckmäßigen Lagerung. Beispielsweise sind die Mikroblattelemente jeweils über einen randseitigen Befestigungsabschnitt auf der Trägerplatte angeordnet, und die Blattabschnitte sind scharnierartig mit den Befestigungsabschnitten verbunden. Insbesondere weisen derartige Mikroblattelemente einen Schichtaufbau auf, welcher wenigstens eine druckverspannte Schicht und eine zugverspannte Schicht umfasst, wobei entlang des Blattabschnitts jedes Mikroblattelements eine druckverspannte Kompensationsschicht auf der zugverspannten Schicht angeordnet ist, derart, dass jedes Mikroblattelement in die folgenden Abschnitte unterteilt ist:
- den Blattabschnitt, welcher global spannungsfrei ausgebildet ist und zwei im Wesentlichen planparallele Oberflächen aufweist,
- den randseitigen Befestigungsabschnitt, welcher starr auf der Trägerplatte der MEMS-Einheit angeordnet ist, und
- einen dazwischenliegenden Scharnierabschnitt, welcher eine eigenspannungsinduzierte Krümmung aufweist, wodurch der Blattabschnitt in eine geöffnete Stellung getrieben wird.

Ohne anliegende elektrische Spannung befinden sich die Blattabschnitte in der vollständig geöffneten Stellung, die aufgrund der vorliegenden mechanischen Eigenspannungen durch eine Krümmung des Scharnierabschnitts zwischen dem auf der Trägerplatte stoffschlüssig fixierten Befestigungsabschnitt und dem spannungskompensierten Blattabschnitt zustande kommt. Beispielsweise weist der Scharnierabschnitt dabei einen Krümmungsradius auf, welcher ein Hundertstel bis ein Drittel der Kantenlänge der Blattabschnitte beträgt. Ausgehend von der vollständig geöffneten Stellung der Blattabschnitte kann durch Anlegen einer elektrischen Spannung zwischen Trägerplatte und Elektroden ein teilweises Schließen der Blattabschnitte erfolgen, bis dass die elektrostatische Anziehungskraft durch die entgegenwirkende Eigenspannung im Scharnierabschnitt kompensiert wird. Beim Überschreiten einer Grenzspannung erfolgt die Einnahme der (vollständig) geschlossenen Stellung, in der der Blattabschnitt plan an der Trägerplatte anliegt. Die räumlich-zeitliche Modulation der Transmissivität des Displays mittels der MEMS-Einheit basiert auf der Aktuierung der einzelnen Blattabschnitte zur Einnahme zweckmäßiger Stellungen. Weitere Details zum Aufbau und Aktuierungsprinzip derartiger Mikroblattelement sind in der Druckschrift EP 4 102 024 A1 offenbart.

MEMS-Einheiten der vorgenannten Ausführungsformen zeichnen sich durch eine geringe Leistungsaufnahme aus, die bei ständiger Aktuierung beispielsweise im Bereich von 0,05 - 0,2 W/m² liegt. Zudem liegen die Schaltzeiten beim Wechsel der Stellungen der Blattabschnitte in der Größenordnung von lediglich 1 - 100 Mikrosekunden (je nach Bauform), sodass eine hochdynamische Modulation der Transmissivität des Displays erzeugbar ist. Die Kantenlängen der insbesondere quadratisch konturierten Blattabschnitte können zweckmäßig aus einem Bereich zwischen wenigen Mikrometern und einigen Millimetern gewählt werden, beispielsweise zwischen 10 Mikrometern und 10 Millimetern.

In einer Ausführungsform der erfindungsgemäßen 3D-Druckvorrichtung weist das Display eine Mehrzahl von MEMS-Einheiten auf, die in Transmissionsrichtung nacheinander angeordnet sind, wobei die Orientierungen der Mikroblattelemente zwischen den MEMS-Einheiten unterschiedlich sind, sodass die Schwenkrichtungen der Blattabschnitte beim Schwenken zwischen der geschlossenen und der wenigstens einen geöffneten Stellung zwischen den MEMS-Einheiten unterschiedlich sind. Dabei sind die MEMS-Einheiten derart kongruent angeordnet, dass jedem Pixel des Displays mehrere nacheinander angeordnete Mikroblattelemente zugeordnet sind, d.h., dass die Transmissivität jedes Pixels durch mehrere Mikroblattelemente modulierbar ist. Der Zweck dieser Ausführungsform besteht darin, die sub-Pixel Auflösung des Displays weiter zu verbessern, wie nachstehend im Zusammenhang mit der Figurenbeschreibung ausführlicher dargestellt wird. Insbesondere weist das Display vier nacheinander angeordnete MEMS-Einheiten auf, wobei sich die Orientierungen der Mikroblattelemente zwischen den MEMS-Einheiten um 90° oder 180° unterscheiden.

In einer weiteren Ausführungsform weist das Display auf der Lichteintrittsseite eine erste Anordnung von Mikrosammellinsen auf, wobei jedem Mikroblattelement der lichteintrittsseitigen MEMS-Einheit eine Mikrosammellinse zugeordnet ist, wobei die Mikrosammellinsen insbesondere derart angeordnet sind, dass eine Lichtbündelung auf die jeweilige Lichtdurchtrittszone der MEMS-Einheit erfolgt. Dies trägt zu einer verbesserten Lichtausbeute der 3D-Druckvorrichtung bei. Die Beleuchtungseinheit ist zur homogenen Hinterleuchtung des Displays ausgebildet und die Mikrosammellinsen bewirken, dass das auf das Display einfallende Licht gebündelt durch die transparenten Lichtdurchtrittszonen transmittiert wird, d.h., ohne wesentliche Absorptionsverluste an anderen Bereichen des Displays, etwa an den randseitigen Befestigungsabschnitten der Mikroblattelemente.

Mit weiterem Vorteil weist das Display auf der Lichtaustrittsseite eine zweite Anordnung von Mikrosammellinsen auf, wobei jedem Mikroblattelement der lichtaustrittsseitigen MEMS-Einheit eine Mikrosammellinse zugeordnet ist, wobei die Mikrosammellinsen derart angeordnet sind, dass eine Kollimation des transmittierten Lichts erfolgt. Die Kollimation des aus der MEMS-Einheit austretenden Lichts bewirkt einen verbesserten Kontrast zwischen benachbarten Pixeln und somit eine verbesserte Detailgenauigkeit bei der Bauteilfertigung.

In weiteren Ausführungsformen weisen die Blattabschnitte eine metallische Beschichtung und/oder eine dielektrische Beschichtung zur Festlegung der Reflexionseigenschaften auf. Insbesondere ist dabei vorgesehen, einen hohen Reflexionsgrad bereitzustellen, um eine übermäßige Erwärmung der Blattabschnitte in der geschlossenen Stellung zu vermeiden. Die Beschichtung ist daher zumindest auf derjenigen Seite der Blattabschnitte appliziert, die in geschlossener Stellung zur Beleuchtungseinheit exponiert ist.

### BEVORZUGTE AUSFÜHRUNGSBEISPIELE DER ERFINDUNG

Weitere, die Erfindung verbessernde Maßnahmen werden nachstehend gemeinsam mit der Beschreibung von bevorzugten Ausführungsbeispielen der Erfindung anhand der Figuren näher dargestellt. Es zeigt in schematischer Form:
- Fig. 1a-d:: Gesamt- und Detailansichten einer 3D-Druckvorrichtung,
- Fig. 2:: eine Schnittansicht eines Displays, und
- Fig. 3a-c:: Schnittansichten eines weiteren Displays.

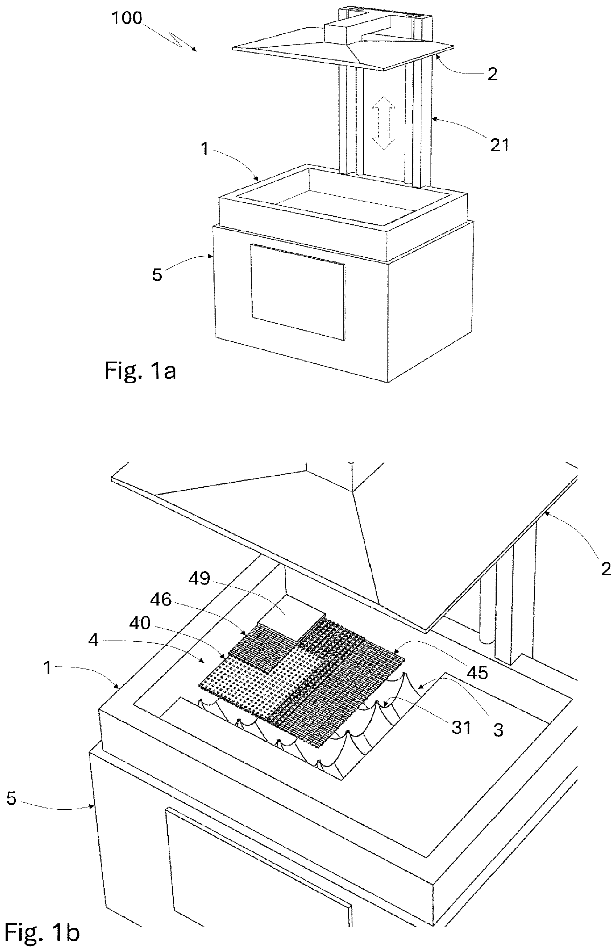

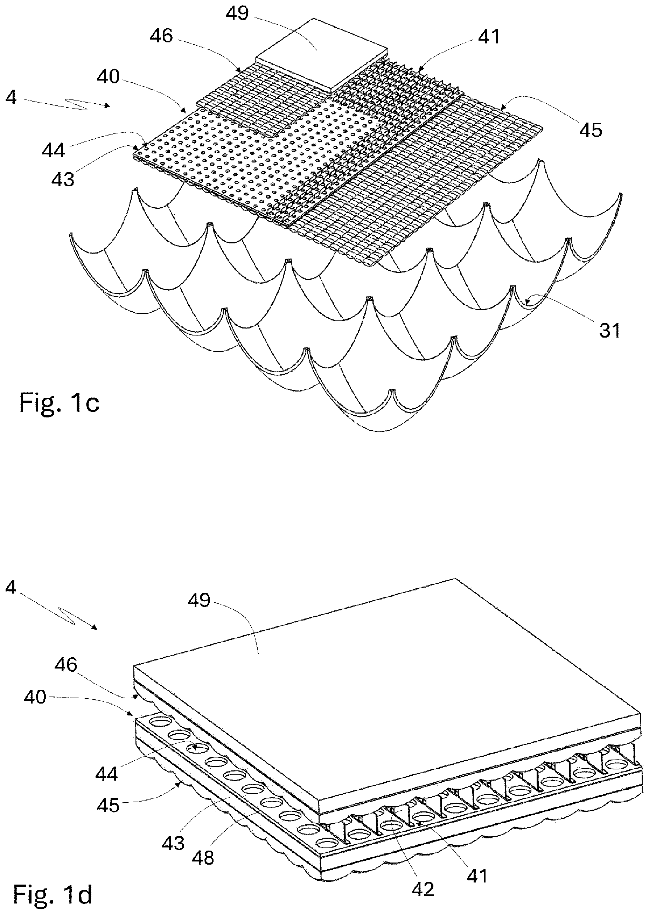

Fig. 1a zeigt eine Gesamtansicht eines Ausführungsbeispiels der erfindungsgemäßen 3D-Druckvorrichtung 100 zur Fertigung von Bauteilen mittels badbasierter Photopolymerisation, und Fig. 1b-d zeigen zugehörige Detailansichten, in denen die diversen Komponenten abschnittsweise ausgeblendet sind.

Die 3D-Druckvorrichtung 100 umfasst den wannenförmigen Behälter 1 für ein Polymerbad sowie die Bauteilplattform 2, die relativ zum Behälter 1 verlagerbar ist, d.h., an den Linearführungen 21 in den Behälter 1 abgesenkt bzw. aus diesem herausgehoben werden kann. Unterhalb des transparenten Bodens des Behälters 1 sind das Display 4 und die Beleuchtungseinheit 3 in dem Sockel 5 aufgenommen. Die Beleuchtungseinheit 3 umfasst hier beispielhaft eine Anordnung von parabolförmigen Reflektoren 31, in deren Grund jeweils ein UV-Licht emittierendes LED-Leuchtmittel (in den Figuren nicht sichtbar) angeordnet ist. Die Beleuchtungseinheit 3 ist somit zur homogenen Hinterleuchtung des Displays 4 eingerichtet. Das zwischen der Beleuchtungseinheit 3 und dem transparenten Boden des Behälters 1 angeordnete Display 4 erzeugt beim additiven Fertigungsprozess durch eine zweckmäßige Modulation seiner Transmissivität die für jede Bauteilschicht erforderliche Belichtung eines im Behälter 1 aufgenommenen Polymerbads.

Das Display 4 umfasst die MEMS-Einheit 40, die eine regelmäßige Anordnung von Mikroblattelementen 41 mit aktuierbaren Blattabschnitten 42 aufweist, die jeweils zwischen einer lichtundurchlässigen geschlossenen Stellung und wenigstens einer lichtdurchlässigen geöffneten Stellung schwenkbar sind, derart, dass die räumlich-zeitliche Modulation der optischen Transmissivität des Displays 4 mittels Aktuierung der Blattabschnitte 42 erzeugbar ist. Die MEMS-Einheit 40 umfasst die Trägerplatte 43 mit einer der Anzahl an Mikroblattelementen 41 entsprechenden Anzahl an Lichtdurchtrittszonen 44, wobei die Mikroblattelemente 41 auf der Trägerplatte 43 angeordnet und je einer Lichtdurchtrittszone 44 zugeordnet sind, wobei die Blattabschnitte 42 in der jeweils geschlossenen Stellung parallel zur Trägerplatte 43 orientiert sind und die jeweils zugeordnete Lichtdurchtrittszone 44 vollständig überdecken, und wobei die Blattabschnitte 42 in der wenigstens einen geöffneten Stellung derart verschwenkt sind, dass die jeweils zugeordnete Lichtdurchtrittszone 44 in Transmissionsrichtung zumindest teilweise freigelegt ist. In den Darstellungen der Fig. 1b-d nehmen die Blattabschnitte 42 beispielhaft jeweils eine vollständig geöffnete Stellung ein, in der sie um einen Schwenkwinkel von 90° gegenüber der geschlossenen Stellung verschwenkt sind und keine Verringerung der optischen Transmissivität bewirken, d.h., dass bei diesen Stellungen sämtliche Pixel des Displays 4 im Betrieb der Beleuchtungseinheit 3 aktiv sind und mit maximaler Intensität leuchten.

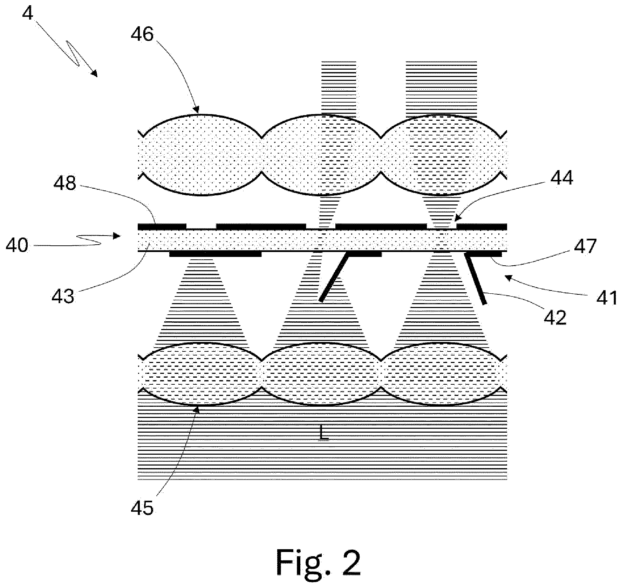

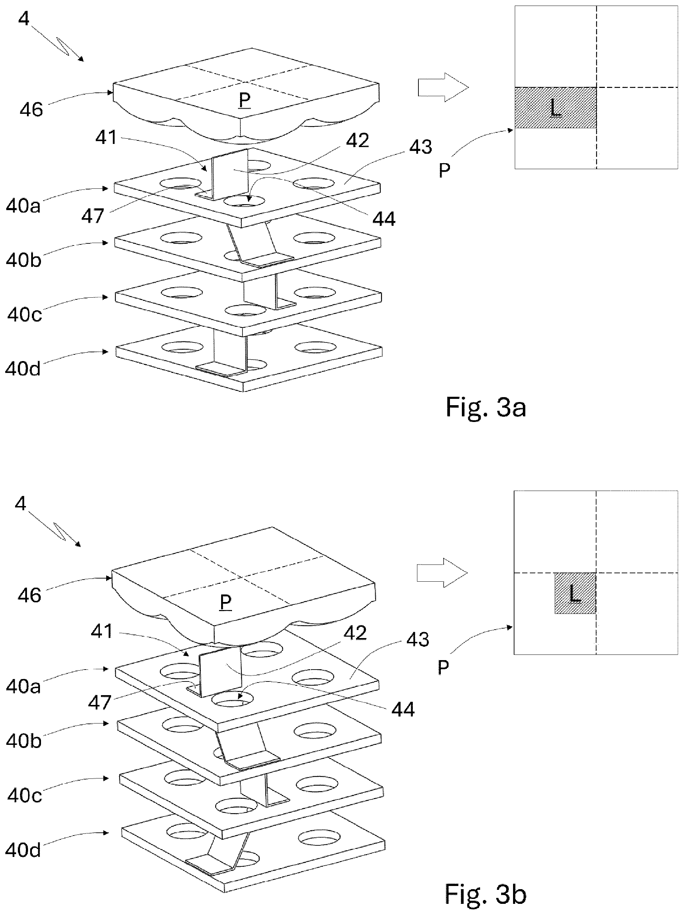

Die Lichtdurchtrittszonen 44 sind hier beispielhaft als kreisrunde Öffnungen der opaken Beschichtung 48 ausgebildet, sodass die transparente, insbesondere aus einem optischen Glas gefertigte Trägerplatte 43 jeweils lokal freigelegt wird. In Fig. 1b-d sowie auch in Fig. 2 und Fig. 3a-c sind aus Gründen der Übersichtlichkeit weder die zur elektrostatischen Aktuierung der Mikroblattelemente 41 notwendigen Mittel, insbesondere eine Elektroden- und eine Isolationsschicht sowie das zugehörige elektrische Adressierungsnetzwerk, noch der Schichtaufbau der Mikroblattelemente 41 selbst dargestellt. Hierzu wird insbesondere auf die Druckschrift EP 4 102 024 A1 verwiesen.

Weiterhin weist das Display 4 im Ausführungsbeispiel der Fig. 1b-d auf der Lichteintrittsseite die erste Anordnung von Mikrosammellinsen 45 auf, wobei jedem Mikroblattelement 41 eine Mikrosammellinse 45 zugeordnet ist, wobei die Mikrosammellinsen 45 derart angeordnet sind, dass eine Lichtbündelung auf die jeweilige Lichtdurchtrittszone 44 erfolgt. Zudem umfasst das Display 4 auf der Lichtaustrittsseite die zweite Anordnung von Mikrosammellinsen 46, wobei jedem Mikroblattelement 41 eine Mikrosammellinse 46 zugeordnet ist, wobei die Mikrosammellinsen 46 derart angeordnet sind, dass eine Kollimation des transmittierten Lichts erfolgt. Die Wirkung der Mikrosammellinsen 45, 46 wird anhand der Fig. 2 nachstehend näher erläutert. Lichtaustrittsseitig schließt das Display 4 mit der transparenten Deckplatte 49 ab, die zugleich den Boden des Behälters 1 bilden kann.

Fig. 2 zeigt eine Schnittansicht eines Details des Displays 4 eines weiteren Ausführungsbeispiels der erfindungsgemäßen 3D-Druckvorrichtung nebst des Strahlengangs des Lichts L, das als homogene Hinterleuchtung des Displays 4 von der (hier nicht dargestellten) Beleuchtungseinheit eingestrahlt wird.

Das Display 4 umfasst die MEMS-Einheit 40 mit Mikroblattelementen 41, deren Blattabschnitte 42 in eine Mehrzahl an geöffneten Stellungen schwenkbar sind, wobei sich die optische Transmissivität des Displays 4 zwischen den unterschiedlichen geöffneten Stellungen unterscheidet, und wobei die Blattabschnitte 42 zwischen der geschlossenen Stellung und einer vollständig geöffneten Stellung über ein Schwenkwinkelintervall von bis zu 110° im Wesentlichen stufenlos schwenkbar sind. Beispielhaft ist der Blattabschnitt 42 des linken Mikroblattelements 41 in der geschlossenen Stellung dargestellt, wobei der Blattabschnitt 42 parallel zur Trägerplatte 43 orientiert ist und die zugehörige Lichtdurchtrittszone 44 vollständig überdeckt, d.h., lichtundurchlässig verschließt. Die Blattabschnitte 42 des mittleren und des rechten Mikroblattelements 41 sind in einer teilgeöffneten bzw. der vollständig geöffneten Stellung dargestellt, wobei die Schwenkwinkel gegenüber der geschlossenen Stellung 60° bzw. 110° betragen.

Das von der Beleuchtungseinheit einfallende Licht L trifft auf der Lichteintrittsseite des Displays 4 auf die erste Anordnung von Mikrosammellinsen 45, die eine Lichtbündelung auf die jeweilige Lichtdurchtrittszone 44 bewirken. Aufgrund dieser Lichtbündelung findet keine unerwünschte Lichtabsorption an den randseitigen Befestigungsabschnitten 47 der Mikroblattelemente 41 oder an der opaken Beschichtung 48 statt. Letztere dient dazu, etwaig auftretendes Streulicht zu absorbieren und somit auch ein "Übersprechen" benachbarter Pixel zu verhindern. Austrittsseitig erfolgt durch die zweite Anordnung von Mikrosammellinsen 46 eine Kollimation des transmittierten Lichts L, sodass die einzelnen Pixel des Displays 4 kontrastreich und trennscharf voneinander abgegrenzt sind.

In der beispielhaft gewählten Stellung der Blattabschnitte 42, wird das Licht L am linken Mikroblattelement 41 absorbiert und das zugehörige Pixel des Displays 4 bleibt dunkel. Am rechten Mikroblattelement 41 wird das Licht L vollständig transmittiert, da der Blattabschnitt 42 in der vollständig geöffneten Stellung gänzlich aus dem Lichtweg herausgeschwenkt ist. Am teilgeöffneten mittleren Mikroblattelement 41 wird das Licht L teils transmittiert, teils am Blattabschnitt 42 absorbiert. Der transmittierte Anteil wird durch die Wirkung der Mikrosammellinse 46 in einen Teilbereich des zugehörigen Display-Pixels kollimiert, sodass eine Belichtung mit sub-Pixel Auflösung erzeugt wird.

Die Fig. 3a-c zeigen Schnittansichten eines Details des Displays 4 eines weiteren Ausführungsbeispiels der erfindungsgemäßen 3D-Druckvorrichtung. Das Display 4 umfasst vier MEMS-Einheiten 40a, 40b, 40c, 40d, die in Transmissionsrichtung nacheinander angeordnet sind, wobei sich die Orientierungen der Mikroblattelemente 41 zwischen den MEMS-Einheiten 40a-d um 90° oder 180° unterscheiden, sodass die Schwenkrichtungen der Blattabschnitte 42 beim Schwenken zwischen der geschlossenen und der wenigstens einen geöffneten Stellung zwischen den MEMS-Einheiten 40a-d unterschiedlich sind. Die unterschiedliche Orientierung der Mikroblattelemente 41 zeigt sich auch in der unterschiedlichen Positionierung der Befestigungsabschnitte 47 relativ zu den zugehörigen Lichtdurchtrittszonen 44 (die hier rein schematisch als Öffnungen in den Trägerplatten 43 dargestellt sind). Zwecks Übersichtlichkeit der Darstellung ist je MEMS-Einheit 40a-d jeweils nur ein Mikroblattelement 41 gezeigt.

Die vier MEMS-Einheiten 40a-d sind derart kongruent zueinander angeordnet, dass je vier Lichtdurchtrittszonen 44 in Transmissionsrichtung in Deckung liegen, sodass ein entsprechender "Lichtkanal" unter jedem Pixel P des Displays 4 gebildet ist. Jedes Mikroblattelement 41 entlang dieses Lichtkanals kann durch Aktuierung des jeweiligen Blattabschnitts 42 den Lichtkanal manipulieren, d.h., den Kanaldurchmesser lokal reduzieren oder den Lichtkanal durch Einnahme der geschlossenen Stellung gänzlich schließen. Für die Anwendung in der additiven Fertigung sind insbesondere die teilgeschlossenen Stellungen der Blattabschnitte 42 von Interesse, da diese zu einer Verkleinerung und/oder Verschiebung des ausgeleuchteten Abschnitts des zugehörigen Pixels P führen, d.h., vielfältige Möglichkeiten der sub-Pixel Auflösung eröffnen.

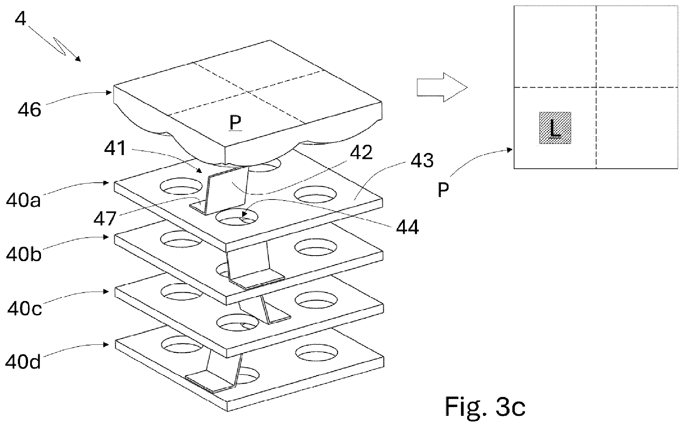

Zur Illustration der sub-Pixel Auflösung ist auf der Lichtaustrittsseite der Mikrosammellinsen 46 eine schachbrettförmige Unterteilung in Pixel P eingezeichnet, und die jeweils in die Fig. 3a-c aufgenommenen Teilbilder zeigen die Draufsicht auf diese Lichtaustrittsseite. In der Darstellung wird angenommen, dass das Display 4 durch die (hier nicht dargestellte) Beleuchtungseinheit hinterleuchtet wird, wobei die Transmissivität des Displays 4 im Pixel P durch die Stellungen der vier jeweils dargestellten Blattabschnitte 42 bestimmt wird. In Fig. 3a sind drei Blattabschnitte 42 in der vollständig geöffneten Stellung, und der Blattabschnitt 42 der MEMS-Einheit 40b ist in einer teilgeöffneten, um 60° gegen die Trägerplatte 43 geschwenkten Stellung. Dies führt dazu, dass das Pixel P im Bereich einer Hälfte leuchtet (schraffiertes Feld), wohingegen die andere Hälfte dunkel bleibt. In Fig. 3b wird der aktive Bereich des Pixels P weiter eingeschränkt, indem auch der Blattabschnitt 42 der MEMS-Einheit 40d in eine teilgeöffnete, um 60° gegen die Trägerplatte 43 geschwenkten Stellung verbracht wird. Da sich die Orientierung der Mikroblattelemente 41 zwischen der MEMS-Einheit 40b und der MEMS-Einheit 40d um 90° unterscheiden, resultiert die dargestellte Einschränkung des leuchtenden Bereichs auf ein Eckviertel des Pixels P. Mittels der in Fig. 3c dargestellten teilgeöffneten Stellungen aller vier Blattabschnitte 42, jeweils um 80° gegenüber den Trägerplatten 43, wird eine symmetrische Einschränkung des aktiven Pixelbereichs erzeugt, sodass das Pixel P lediglich in einem zentralen Abschnitt leuchtet.

### Bezugszeichenliste:

- 100: 3D-Druckvorrichtung
- 1: Behälter
- 2: Bauteilplattform
- 21: Linearführung
- 3: Beleuchtungseinheit
- 31: Reflektor
- 4: Display
- 40: MEMS-Einheit
- 41: Mikroblattelement
- 42: Blattabschnitt
- 43: Trägerplatte
- 44: Lichtdurchtrittszone
- 45: Mikrosammellinse
- 46: Mikrosammellinse
- 47: Befestigungsabschnitt
- 48: Beschichtung
- 49: Deckplatte
- 5: Sockel
- L: Licht
- P: Pixel

## Patentansprüche

1. 3D-Druckvorrichtung (100) zur Fertigung von Bauteilen mittels badbasierter Photopolymerisation, wenigstens umfassend
- einen Behälter (1) für ein Polymerbad,
- eine Bauteilplattform (2), die relativ zum Behälter (1) verlagerbar ist,
- eine Beleuchtungseinheit (3) zur Belichtung des Polymerbads, insbesondere umfassend UV-Licht (L) emittierende LED-Leuchtmittel, und
- ein Display (4), das zwischen der Beleuchtungseinheit (3) und dem Behälter (1) angeordnet und von der Beleuchtungseinheit (3) hinterleuchtbar ist, wobei die optische Transmissivität des Displays (4) räumlich und zeitlich modulierbar ist,
**dadurch gekennzeichnet,**
**dass** das Display (4) wenigstens eine MEMS-Einheit (40) umfasst, die eine regelmäßige Anordnung von Mikroblattelementen (41) mit aktuierbaren Blattabschnitten (42) aufweist, die jeweils zwischen einer lichtundurchlässigen geschlossenen Stellung und wenigstens einer lichtdurchlässigen geöffneten Stellung schwenkbar sind, derart, dass die räumlich-zeitliche Modulation der optischen Transmissivität des Displays (4) mittels Aktuierung der Blattabschnitte (42) erzeugbar ist.

2. 3D-Druckvorrichtung (100) nach Anspruch 1,
**dadurch gekennzeichnet,**
**dass** die Blattabschnitte (42) in eine Mehrzahl an geöffneten Stellungen schwenkbar sind, wobei sich die optische Transmissivität des Displays (4) zwischen den unterschiedlichen geöffneten Stellungen unterscheidet, wobei insbesondere eine vollständig geöffnete Stellung einnehmbar ist, in der jeweilige Blattabschnitt (42) keine Verringerung der optischen Transmissivität bewirkt.

3. 3D-Druckvorrichtung (100) nach Anspruch 1 oder 2,
**dadurch gekennzeichnet,**
**dass** die Blattabschnitte (42) zwischen der geschlossenen Stellung und einer vollständig geöffneten Stellung über ein Schwenkwinkelintervall von bis zu 110° schwenkbar sind, wobei die Blattabschnitte (42) insbesondere im Wesentlichen stufenlos schwenkbar sind.

4. 3D-Druckvorrichtung (100) nach einem der vorgenannten Ansprüche, **dadurch gekennzeichnet,**
**dass** die wenigstens eine MEMS-Einheit (40) eine Trägerplatte (43) mit einer der Anzahl an Mikroblattelementen (41) entsprechenden Anzahl an Lichtdurchtrittszonen (44) aufweist, wobei die Mikroblattelemente (41) auf der Trägerplatte (43) angeordnet und je einer Lichtdurchtrittszone (44) zugeordnet sind, wobei die Blattabschnitte (42) in der jeweils geschlossenen Stellung parallel zur Trägerplatte (43) orientiert sind und die jeweils zugeordnete Lichtdurchtrittszone (44) vollständig überdecken, und wobei die Blattabschnitte (42) in der wenigstens einen geöffneten Stellung derart verschwenkt sind, dass die jeweils zugeordnete Lichtdurchtrittszone (44) in Transmissionsrichtung zumindest teilweise freigelegt ist.

5. 3D-Druckvorrichtung (100) nach einem der vorgenannten Ansprüche, **dadurch gekennzeichnet,**
**dass** das Display (4) eine Mehrzahl von MEMS-Einheiten (40) aufweist, die in Transmissionsrichtung nacheinander angeordnet sind, wobei die Orientierungen der Mikroblattelemente (41) zwischen den MEMS-Einheiten (40) unterschiedlich sind, sodass die Schwenkrichtungen der Blattabschnitte (42) beim Schwenken zwischen der geschlossenen und der wenigstens einen geöffneten Stellung zwischen den MEMS-Einheiten (40) unterschiedlich sind.

6. 3D-Druckvorrichtung (100) nach Anspruch 5,
**dadurch gekennzeichnet,**
**dass** das Display (4) vier MEMS-Einheiten (40a, 40b, 40c, 40d) aufweist, wobei sich die Orientierungen der Mikroblattelemente (41) zwischen den MEMS-Einheiten (40a, 40b, 40c, 40d) um 90° oder 180° unterscheiden.

7. 3D-Druckvorrichtung (100) nach einem der vorgenannten Ansprüche, **dadurch gekennzeichnet,**
**dass** das Display (4) auf der Lichteintrittsseite eine erste Anordnung von Mikrosammellinsen (45) aufweist, wobei jedem Mikroblattelement (41) der lichteintrittsseitigen MEMS-Einheit (40) eine Mikrosammellinse (45) zugeordnet ist, wobei die Mikrosammellinsen (45) insbesondere derart angeordnet sind, dass eine Lichtbündelung auf die jeweilige Lichtdurchtrittszone (44) erfolgt.

8. 3D-Druckvorrichtung (100) nach einem der vorgenannten Ansprüche, **dadurch gekennzeichnet,**
**dass** das Display (4) auf der Lichtaustrittsseite eine zweite Anordnung von Mikrosammellinsen (46) aufweist, wobei jedem Mikroblattelement (41) der lichtaustrittsseitigen MEMS-Einheit (40) eine Mikrosammellinse (46) zugeordnet ist, wobei die Mikrosammellinsen (46) derart angeordnet sind, dass eine Kollimation des transmittierten Lichts erfolgt.

9. 3D-Druckvorrichtung (100) nach einem der vorgenannten Ansprüche, **dadurch gekennzeichnet,**
**dass** die Blattabschnitte (42) eine metallische Beschichtung und/oder eine dielektrische Beschichtung zur Festlegung der Reflexionseigenschaften aufweisen.

## Geänderte Patentansprüche

### Geänderte Patentansprüche gemäss Regel 137(2) EPÜ.

1. 3D-Druckvorrichtung (100) zur Fertigung von Bauteilen mittels badbasierter Photopolymerisation, wenigstens umfassend
- einen Behälter (1) für ein Polymerbad,
- eine Bauteilplattform (2), die relativ zum Behälter (1) verlagerbar ist,
- eine Beleuchtungseinheit (3) zur Belichtung des Polymerbads, insbesondere umfassend UV-Licht (L) emittierende LED-Leuchtmittel, und
- ein Display (4), das zwischen der Beleuchtungseinheit (3) und dem Behälter (1) angeordnet und von der Beleuchtungseinheit (3) hinterleuchtbar ist, wobei die optische Transmissivität des Displays (4) räumlich und zeitlich modulierbar ist,
wobei das Display (4) wenigstens eine MEMS-Einheit (40) umfasst, die eine regelmäßige Anordnung von Mikroblattelementen (41) mit aktuierbaren Blattabschnitten (42) aufweist, die jeweils zwischen einer lichtundurchlässigen geschlossenen Stellung und wenigstens einer lichtdurchlässigen geöffneten Stellung schwenkbar sind, derart, dass die räumlich-zeitliche Modulation der optischen Transmissivität des Displays (4) mittels Aktuierung der Blattabschnitte (42) erzeugbar ist, und wobei das Display (4) auf der Lichtaustrittsseite eine erste Anordnung von Mikrosammellinsen (46) aufweist, wobei jedem Mikroblattelement (41) der wenigstens einen MEMS-Einheit (40) oder einer lichtaustrittsseitigen MEMS-Einheit (40a) eine Mikrosammellinse (46) zugeordnet ist, wobei die Mikrosammellinsen (46) derart angeordnet sind, dass eine Kollimation des transmittierten Lichts erfolgt.

2. 3D-Druckvorrichtung (100) nach Anspruch 1,
**dadurch gekennzeichnet,**
**dass** die Blattabschnitte (42) in eine Mehrzahl an geöffneten Stellungen schwenkbar sind, wobei sich die optische Transmissivität des Displays (4) zwischen den unterschiedlichen geöffneten Stellungen unterscheidet, wobei insbesondere eine vollständig geöffnete Stellung einnehmbar ist, in der jeweilige Blattabschnitt (42) keine Verringerung der optischen Transmissivität bewirkt.

3. 3D-Druckvorrichtung (100) nach Anspruch 1 oder 2,
**dadurch gekennzeichnet,**
**dass** die Blattabschnitte (42) zwischen der geschlossenen Stellung und einer vollständig geöffneten Stellung über ein Schwenkwinkelintervall von bis zu 110° schwenkbar sind, wobei die Blattabschnitte (42) insbesondere im Wesentlichen stufenlos schwenkbar sind.

4. 3D-Druckvorrichtung (100) nach einem der vorgenannten Ansprüche, **dadurch gekennzeichnet,**
**dass** die wenigstens eine MEMS-Einheit (40) eine Trägerplatte (43) mit einer der Anzahl an Mikroblattelementen (41) entsprechenden Anzahl an Lichtdurchtrittszonen (44) aufweist, wobei die Mikroblattelemente (41) auf der Trägerplatte (43) angeordnet und je einer Lichtdurchtrittszone (44) zugeordnet sind, wobei die Blattabschnitte (42) in der jeweils geschlossenen Stellung parallel zur Trägerplatte (43) orientiert sind und die jeweils zugeordnete Lichtdurchtrittszone (44) vollständig überdecken, und wobei die Blattabschnitte (42) in der wenigstens einen geöffneten Stellung derart verschwenkt sind, dass die jeweils zugeordnete Lichtdurchtrittszone (44) in Transmissionsrichtung zumindest teilweise freigelegt ist.

5. 3D-Druckvorrichtung (100) nach einem der vorgenannten Ansprüche, **dadurch gekennzeichnet,**
**dass** das Display (4) eine Mehrzahl von MEMS-Einheiten (40) aufweist, die in Transmissionsrichtung nacheinander angeordnet sind, wobei die Orientierungen der Mikroblattelemente (41) zwischen den MEMS-Einheiten (40) unterschiedlich sind, sodass die Schwenkrichtungen der Blattabschnitte (42) beim Schwenken zwischen der geschlossenen und der wenigstens einen geöffneten Stellung zwischen den MEMS-Einheiten (40) unterschiedlich sind.

6. 3D-Druckvorrichtung (100) nach Anspruch 5,
**dadurch gekennzeichnet,**
**dass** das Display (4) vier MEMS-Einheiten (40a, 40b, 40c, 40d) aufweist, wobei sich die Orientierungen der Mikroblattelemente (41) zwischen den MEMS-Einheiten (40a, 40b, 40c, 40d) um 90° oder 180° unterscheiden.

7. 3D-Druckvorrichtung (100) nach einem der vorgenannten Ansprüche, **dadurch gekennzeichnet,**
**dass** das Display (4) auf der Lichteintrittsseite eine zweite Anordnung von Mikrosammellinsen (45) aufweist, wobei jedem Mikroblattelement (41) der lichteintrittsseitigen MEMS-Einheit (40) eine Mikrosammellinse (45) zugeordnet ist, wobei die Mikrosammellinsen (45) insbesondere derart angeordnet sind, dass eine Lichtbündelung auf die jeweilige Lichtdurchtrittszone (44) erfolgt.

8. 3D-Druckvorrichtung (100) nach einem der vorgenannten Ansprüche, **dadurch gekennzeichnet,**
**dass** die Blattabschnitte (42) eine metallische Beschichtung und/oder eine dielektrische Beschichtung zur Festlegung der Reflexionseigenschaften aufweisen.
